# EUROPEAN PATENT SPECIFICATION

(11) **EP 0 676 438 B1**
(45) Date of publication and mention of the grant of the patent: **14.07.1999**
(21) Application number: 95109065.3
(22) Date of filing: 27.10.1992
(51) Int. Cl.: C08J 5/18, B32B 27/34, B29C 55/12

(54) **Oriented film easy to split and method of producing the same**
Orientierter trennbarer Film und Verfahren zu seiner Herstellung
Feuille orientée facilement déchirable et procédé pour sa fabrication

(30) Priority: 28.10.1991 JP 30842791; 31.10.1991 JP 31367591
(43) Date of publication of application: 11.10.1995
(62) Divisional of application: 92309827.1
(73) Proprietor: IDEMITSU PETROCHEMICAL CO. LTD., Tokyo 100 (JP)
(72) Inventor: Takashige, Masao, c/o Idemitsu Petro. Co., Ltd., Himeji-shi, Hyogo-ken (JP); Hayashi, Takeo, c/o Idemitsu Petro. Co., Ltd., Himeji-shi, Hyogo-ken (JP); Utsuki, Katsumi, c/o Idemitsu Petro. Co., Ltd., Himeji-shi, Hyogo-ken (JP); Iwamoto, Takehiro, c/o Idemitsu Petro. Co., Ltd., Himeji-shi, Hyogo-ken (JP)
(74) Representative: Jackson, Peter Arthur

(56) References cited:
- EP-A- 0 288 972
- EP-A- 0 318 964
- EP-A- 0 475 720
- FR-A- 2 327 060
- PATENT ABSTRACTS OF JAPAN vol. 005, no. 123 (M-082) 8 August 1981 & JP-A-56 062 129 (TOYOBO CO LTD) 27 May 1981
- PATENT ABSTRACTS OF JAPAN vol. 015, no. 080 (C-0810) 25 February 1991 & JP-A-02 302 467 (TEIJIN LTD) 14 December 1990
- DATABASE WPI Week 2392, Derwent Publications Ltd., London, GB; AN 92-187600 & JP-A-4 115 926 (SUMITOMO BAKELITE CO) 16 April 1992
- DATABASE WPI Week 3192, Derwent Publications Ltd., London, GB; AN 92-253426 & JP-A-4 169 231 (SUMITOMO BAKELITE CO)

## Description

The present invention is related to a film easy to split and a production method thereof, e.g. a base film for the bag to pack foods, medicines, industrial products and so on.

In recent years, films such as linear chain low density polyethylene (L-LDPE) have been widely used for a seal base film (sealant) of the bag to pack foods, medicines and so on. However, this L-LDPE film was safe to pack contents because the seal strength was excellent, but on the other hand, because a split resistance was too big, it was difficult to cut the film straight along a predetermined direction when opening up. In consideration of these problems, various inventions have been proposed to give the film features of ease to split and to be cut straight.

Examples: (a) a laminated film using a uniaxial oriented film for a middle layer film (Japanese Patent Application Publication No. 58-38320 bulletin, Japanese Patent Application Publication no. 55-31725 bulletin); (b) a laminated film made easier to split by being given a minute blemish to the surface thereof; (c) a (laminated) film with a tape for the opening attached to an opening part; and so on.

In the laminated film (a) mentioned above, because one layer is added as the middle layer film, the material cost and the processing cost to laminate films on top of one another increase. The uniaxial oriented film is used as a middle layer film but its use does not contribute to the strength any more. In the laminated film (b), even if the ease to open can be improved by putting minute blemishes on the film, the ease to cut straight is under control of the feature of the base material itself. Even if the blemishes put on the surface are few, there is fear of decreasing the strength. As for the film (c), because the tape for the opening is additionally used, the cost becomes higher, which may cause the decline of the productivity.

Also, conventionally, the plastic film was heat-treated to fix a film molecular orientation after biaxially oriented by Tubular method for the purpose of getting stability of the dimension. In the heat-treatment, when a film of tubular nylon 6 folded flatly is heat-treated by the tenter method, the upper and lower films are melted by heat and stick to each other and thereafter it is impossible to separate into two sheets, whereby the film processed by means of prior art was unusable as a product. These problems are conspicuously seen when a plastic film is a crystalline thermoplastic resin film like a polyamide. Formerly, to solve the technical problems, one improved tenter method (Japanese Patent Application Publication no. 46-15439 bulletin) was proposed, wherein the film folded flat after being biaxially oriented in tubular situation is separated into two films by cutting both edges in the direction of the width, and they are introduced into the tenter in the condition where the both edges of each film are held with clips to keep a certain clearance between each film. Incidentally, adopting the tubular method, where the tubular film formed into a bubble shape by compression of air is heat-treated, can solve the problem of sticking of films by heat. However, though in the heat treatment based on the above mentioned improved tenter method, the films do not stick to each other, the bowing phenomenon (a phenomenon where a delay in the orientation at the central part occurs compared with both side parts) conspicuously occurred. Though lowering a heat treatment temperature naturally decreases the bowing ratio, it brings about a new problem of increasing the shrinkage percentage in the heat treatment of the boil, retort and so on. The purpose of the present invention is to provide an oriented film easy to split which features the excellent ease to split, the ease to cut straight and the enough impact strength and also to provide a production method of the oriented film easy to split to obtain these features effectively.

EP-A-0475720, which forms part of the state of the art for some states under EPC Article 54(3) and (4), discloses a biaxially oriented film comprising a blend of nylon 66 and nylon MXD6, the weight ratio of said nylon 66 and said nylon MXD6 being 60;40, the orientation be 3 in both the MD and TD directions.

FR-A-2327060 discloses a biaxially oriented film comprising a blend of an aliphatic polyamide and poly-metaxylylene adipamide in a weight ratio of 85:15, the orientation being 3,5 in the MD and 3,7 in the TD directions respectively.

According to the present invention a biaxially oriented film easy to split comprising a blend of nylon (Ny6) and poly meta-xylylene adipamide (MXD6), the weight ratio of said Ny6 and said MXD6 being 40-85:60-15, and the orientation ratios being at least 2.8 in both the MD and TD directions; is characterised in that an ethylene-acetic acid vinyl copolymer saponification material (EVOH) is laminated as a second layer to the said Ny6 - MXD6 first layer, the thickness ratio between said first layer and said second layer being 2:1 - 1:2.

(A) The weight ratio of Ny6 and MXD6 in the 1st layer is 40-85:60-15, preferably 50-80:50-20.

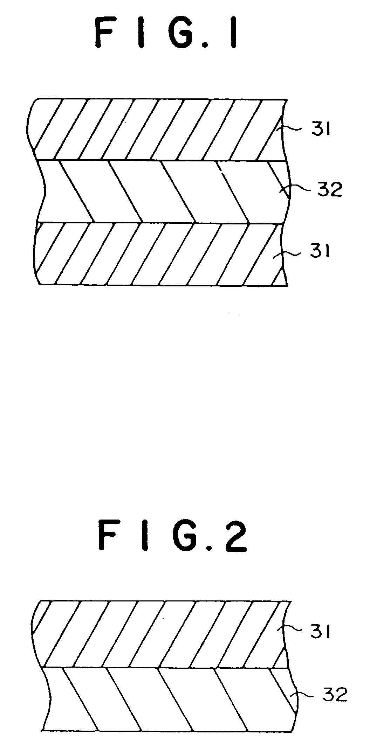

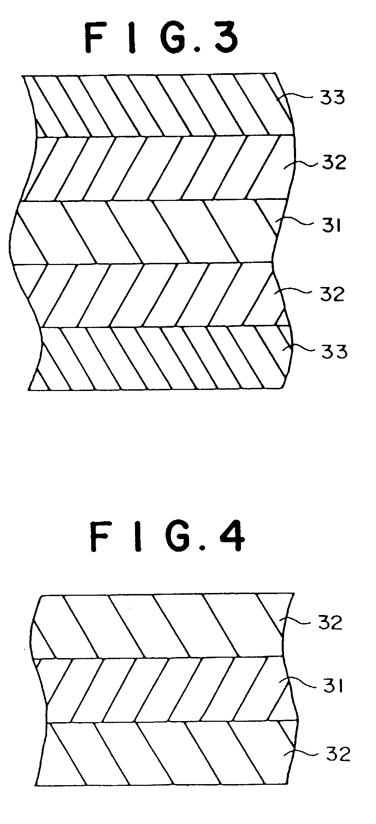

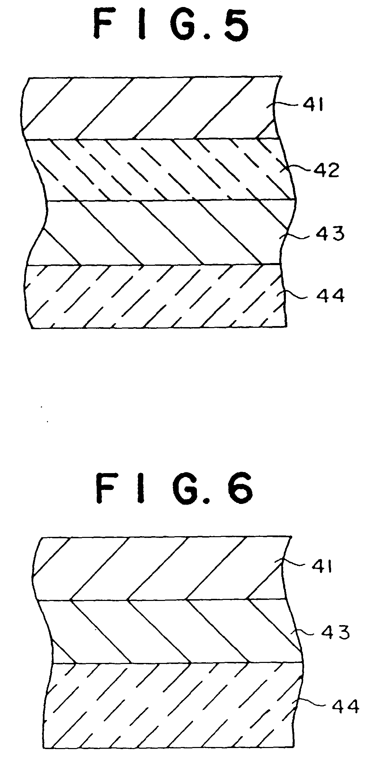

By including a layer comprising EVOH, the oriented film easy to split can be expected to have the properties of a gas barrier. The ethylene content of EVOH in the 2nd layer is, for example, 25-45 mol %, preferably 29-38 mol %. When the ethylene content is smaller than 25 mol %, the formulation of two layers is difficult. When it is greater than 45 mol %, gas barrier properties cannot be expected. As for the thickness ratio between the 1st layer and the 2nd layer, when the thickness of the 1st layer becomes smaller than half of the thickness of the 2nd layer, the ease to split which is the purpose of the present invention, is lowered. Incidentally, in addition to laminating the 1st layer and the 2nd layer as one, further laminating is optionally possible. Examples of film structures are shown in the attached Figures 1-4. Figure 1 shows a film having a 3-layer structure where the 1st layer 31 is laminated on both surfaces of the 2nd layer 32. Figure 2 shows a film having a 2-layer structure where the 1st layer 31 and the 2nd layer 32 are laminated. Figure 3 shows a film having a 5-layer structure where the 3rd layer 33 of Ny 6 is laminated on the both surfaces of the 3-layer structure shown in Figure 1. Figure 4 shows a film having a 3-layer structure where the 2nd layer 32 is laminated on the both surfaces of the 1st layer 31. Incidentally, the thickness of each film which is shown in Figures 1-4 is optionally determined, but is about 8-50 micrometers as a standard. It is possible to laminate the above-mentioned film on other films on the condition that the 1st and 2nd layers are laminated as one. Examples of such structures are shown in Figures 5 and 6. Incidentally, in these figures, the oriented film easy to split is considered to be one of a number of films laminated together films, to make the explanation easier. Figure 5 shows a laminated film easy to split comprising two sheets of base material films 41 and 42, the oriented film 43 easy to split, the sealant film 44 laminated in this order. Figure 6 shows another laminated film easy to split comprising three kinds of films, wherein the film easy to split 43 and the sealant film 44 are laminated to one base film 41.

(B) The method of producing the above-explained oriented film easy to split in the present invention comprises the steps of: producing a raw film by fusing and extruding a raw material mixture containing nylon (Ny) and polymeta-xylylene adipamide (MXD6) at the weight ratio of 40-85:60-15 from an extruder; orienting biaxially the raw film with an orientation ratio of 2.8 and over in MD direction and TD direction by the tubular method; folding the oriented film flat; and heat-treating the folded film.

(B-a) Before the step of fusing and extruding by the extruder, an additional step of kneading the raw material mixture by fusing at the temperature of 300°C and under can be added.

When additionally providing a process of kneading the raw material mixture by fusing at the temperature of 300°C and under, an excellent precision of the thickness can be gained. A kneading machine which is used in a manufacturing process of the fusion kneading of the raw material mixture can be optionally selected, but a biaxial kneading machine is desirable. Also, the temperature of fusion in the case of kneading by fusion should be kept at 300°C and under because the fabricability in orientation is lowered at the temperature higher than 300°C. Also, it will lower an impact strength and a ease to cut straight of the oriented film ease to split.

(B-b) In the step of biaxial orientation using the tubular method, it is desirable that the temperature should be controlled along the circumference direction of the bubble-like raw film so that a heating temperature in the side part in the width direction when folding the bubble-like raw film may be lower than that in other parts which will be used as a product later. By controlling a heating condition at the time of the biaxial orientation, the bowing phenomenon which is in the reverse direction of bowing phenomenon which occurs in the latter heat treatment process is caused intentionally, by which the reduction of bowing ratio is achieved. To expect such an operation, it is necessary to control temperature of the heater to heat the side part in the width direction when folding the bubble-like raw material film and the heater to heat other parts which will be used as a product later. The temperature of the heater to heat the side part of the direction of the width of the bubble-like raw film is made to be 10-100°C, desirably, 20-90°C lower than the average temperature of all the heaters. Also, the temperature of the heater to heat the other part which is used as a product is made to be 10-100°C, desirably 20-90°C higher than the average temperature of all the heaters. Incidentally, when the temperature difference of each heater is less than 10°C, the bowing phenomenon in reverse direction does not reach the expected condition and when the temperature difference of each heater is more than 100°C, the shape of bubble does not become stable. In order to separately control the temperature of the heater to heat the side part of the direction of the width when folding a film and the heater to heat the other part which is used as a product, for example, two heaters to heat the side part in the width direction of the bubble-like raw film, and two heaters to heat the other part which is used as a product, need to be provided. Also, because the temperature inclination covering all the circumference of the bubble-like raw film should be as gentle as possible, it is desirable to prepare more than four heaters to improve the heat control over the film. Moreover, it is desirable to heat the bubble-like raw film so that the heating temperature at the end in the film width direction may be lowest and that at the center part of other parts which is used as a product may be highest. But, the heat treatment of the raw film should be done at the temperature lower than the melting point of the film (220°C).

(B-c) The heat treatment of the film folded flatly should be done through two steps; the first heat treatment process at the temperature of 120-190°C by the tubular method and the second heat treatment process at the temperature of 190-220°C by the tenter method.

Because the 2-stage heat treatment can check bowing, the ease to cut straight along the width direction at an optional place of the film obtained as a product is improved. Also, the adhesion and stickiness by fusion which often occurred in the process of heat treatment can be prevented. The first heat treatment by the tubular method is done with the temperature range of 120-190°C for example, but 140-190°C is desirable. When the temperature is lower than 120°C, a curling of the film is too big, so that both side parts are difficult to be held. Also, when the temperature is higher than 190°C, because films stick to each other by fusion, it is impossible to separate such a stuck film into two sheets after the 1st heat treatment process. Incidentally, it is desirable that the heat treatment time is one second and over. When it is under 1 second, a heat fixation tends to be insufficient. Though there is no upper limit of heat treatment time, the longer the treatment time becomes, the larger orientation equipment is required, which makes the cost higher. Therefore, the heat treatment time should normally be between 1-30 seconds. In the first process of heat treatment, the film relaxation ratio is set to be 15% and under (in MD direction and/or TD direction), and desirably, it should be set to be 10% and under. By giving the film the heat treatment in the condition of relaxing it a little, a crystallinity of the film is improved and the reduction of relaxation ratio is achieved and consequently, the film with dimensional stability is obtained. In the heat treatment by the tubular method, the bowing ratio is 0. Moreover, because a shrinkage stress falls, a bowing ratio caused by the second heat treatment process declines. In other words, an isotropy of the material nature in the width direction of the film reduces and as a result, the ease to cut straight is improved further.

The 2nd process of the heat treatment by the Tenter method is done with the temperature range of 190-220°C, but it should be 190-215°C desirably. When it is lower than 190°C, a shrinkage ratio becomes big and isn't desirable. Also, when it is higher than 220°C, a fusion among films occurs and it is impossible to roll them as products of two sheets. Incidentally, the condition of heat treatment time is the same as the case of the heat treatment of the above-mentioned 1st process. In the 2nd process of heat treatment, the film relaxation ratio is set to be 15% and under, but to be 10% and under desirably it is also desirable that after the first step of heat treatment, the both ends of the width direction of the film are cut open to separate them into two and that the 2nd process of heat treatment should be done with air contained between the both films. Moreover, as for the heat treatment process of the film folded flat, it is possible to implement the heat treatment of the 1st process based on the tenter method instead of above-mentioned tubular method. The heat treatment temperature in this case is, e.g. 120-190°C, but 140-190°C is desirable. When lower than 120°C, two sheets of film are fused in the 2nd process of the heat treatment and the stability with the ease to cut straight is lowered. On the other hand, when higher than 190°C, in the first process of the heat treatment, the fusion of two sheets occurs. Incidentally, the condition of the relaxation ratio of the film and the heat treatment time by this Tenter method are the same as in the case of the tubular method.

In the drawings:

Figure 1-6 are sectional views which show a construction of the film according to the present invention.

Figure 7 is a schematic diagram of an equipment used in the production method of the oriented film easy to split concerning this invention.

Figure 8 is a view which shows a way of evaluating the ease to cut straight.

### Reference example

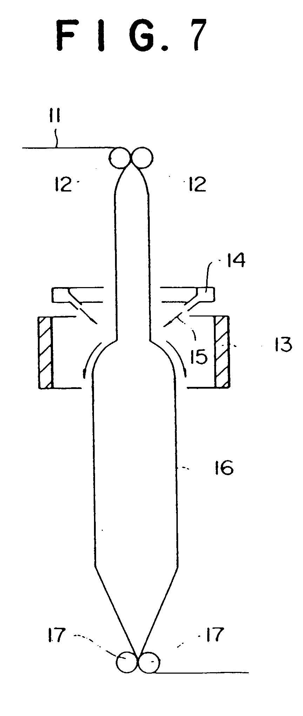

First, a raw film 11 (see Figure 7) is obtained by fusing and kneading a material mixture containing nylon 66 (Ny66) and polymeta-xylylene adipamide (MXD6) at the weight ratio of 80:20 in an extruder at the temperature of 280°C, subsequently extruding the fused material from an accompanied die with the diameter of 90 mm into a cylinder-like film and cooling the thus-obtained film down with water. Nylon 66 produced by Ube Kosan Co. LTD. (the tradename: UBE nylon 2026 a relative viscosity = 3.5) is used as Ny66 in this Reference example. Also, polymeta-xylylene adipamide produced by Mitsubishi Gas Chemicals Co.Ltd. (the tradename: MX nylon 6007, a relative viscosity = 2.7) is used as MXD6 in this example. As shown in Figure 7, the raw film 11 is inserted in to the pair of pinch rollers 12 and then heated from the outside by a heater 13 with an air forced into the inside. Near a starting point when the raw film 11 begins to biaxially orient and grow in to a bubble 16, air 15 is blown from an air duct 14. Incidentally, the bubble 16 is continuously drawn into a pair of pinch rollers 17. Through these steps, the simultaneous biaxial orientation is conducted in MD (the direction of movement of the film) and TD (the width direction of the film) directions according to the tubular method, wherein the orientation ratios in both directions are 3.0. The biaxial oriented film obtained in such a way is then sent to a heat treat furnace based on the tenter method, whereby the film is heat fixed at 210°C and becomes a biaxial oriented film. Incidentally, this biaxial oriented film is the oriented monolayer film easy to split containing Ny66 and MXD6. The oriented film easy to split (a 15-micrometer thickness) is used as the base film for the surface and is laminated with L-LDPE film as a sealant film (Tradename: Unilax LS-722C, produced by Idemitsu Petrochemical Co.Ltd. 50 micrometers thickness) according to the dry-laminate method and then it becomes laminated film easy to split of this Reference example. This laminated film easy to split can be made into a bag easy to split by being processed in a bag making machine.

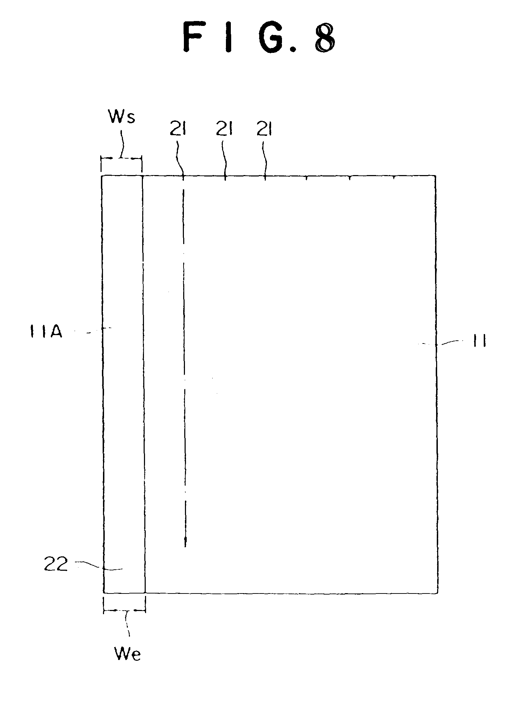

Incidentally, split strength is Elemendorf split strength (N/cm) measured following JIS-Z1702 in the direction of the orientation of the film. Also, the impact strength is measured by using a film impact tester produced by Toyo Seiki Co.Ltd., wherein the impact strength is measured by punching the laminated film which is ring-likely fixed with a semi-tubular pendulum (a diameter: 1/2 inch (12.7mm), mass: 30kg). As for the results of the measurement, the impact strength of 4,500 N.cm/cm and over is expressed in a circle, and that of smaller than 4,500 N.cm/cm is in a cross. When an impact strength is smaller than 4500 N.cm/cm, because the efficiency as a base material for the surface is lowered, the practicality as the base material for liquid packing is scarce. As for the evaluation of the ease to split, when the value "E", the value of Elemendorf split strength, is 70 N/cm and under, it is expressed in a circle, when the value E is between 70 and 90 N/cm, it is in a triangle, and when it is 90 N/cm and over, it is in a cross. When the value E becomes more than 90 N/cm, the ease to split is conspicuously lowered and the ease to cut straight is drastically decreased. The evaluation of the ease to cut straight is made in the following procedure. As is shown in Figure 8, it is supposed that slits 21 are put at a certain interval Ws = 2cm on the film 11 with the width of 20cm. When the film 11 is torn from the one end along the slit 21, the width We of the other end 22 of the film piece 11A is measured. It is possible to calculate deviation a with the width Ws on the one side of the film llA and the width We of the other side as follows.$\text{α = [(Ws - We)/Ws]x100}$

In this Reference example, such measurement is done for 10 sheets of film pieces 11A, wherein, as for the average of deviation, less than ±10% is expressed in a double circle (the ease to cut straight is excellent), between ±10% and ±30% is in a circle (the ease to cut straight is good), and more than 30% is in a cross (the ease to cut straight is insufficient). When the average is more than ±30%, it is difficult to cut film 11 straight. The strength against falling is determined by checking whether the bag is torn when the bag easy to split (130mm x 150mm) containing 150 cc of liquid with same quantity of a water and an antifreeze is dropped from the height of 2m repeatedly 20 times in a condition that the front and the back sides of the bag are put parallel to the dropping spot on the ground. But, the test temperature is -20°C. The dropping test was given to the prepared 10 bags. The results are expressed in a double circle when no bag is torn (= ideal for practical use), a circle when one or two bags are torn (= suitable for practical use) and in a cross when more than two bags are torn (= not suitable for practical use). As for the symbols used in the column of the total evaluation in the Tables which follow, a double circle means very good, a circle means good and a cross means poor.

### Experimental example 1

The oriented film easy to split prescribed by this experimental example is made as follows. The cylinder-like raw film 11 is made by kneading the raw material mixture which contains nylon 6(Ny6) and polymeta-xylylene adipamide (MXD6) at the weight ratio of 60:40 in the fusion at the temperature of 270°C in an extruder (a 40mm diameter), kneading ethylene-vinyl acetate copolymer saponification (EVOH) in the fusion at a temperature of 220°C in another extruder (a 30mm diameter), extruding those fusion materials as a three-layer film of Ny6+MXD6/EVOH/Ny6+MXD6 (a thickness ratio in the layer is 2:1:2) with a circular die with diameter of 90mm, and cooling it down with water rapidly and the structure is shown in Figure 1. The Ny6 used is nylon 6 made by Ube Kosan Co.Ltd. (the tradename: UBE Nylon 1023 FD, the relative viscosity = 3.6). Also, EVOH is the ethylene-vinyl acetate copolymer saponification made by Kuraray Co.Ltd. (the tradename: EVAL F, the ethylene content 32 mol%). Next, as is shown in Figure 7, the raw film 11 is simultaneously biaxially oriented like in the above-mentioned Reference example. Incidentally, the orientation ratio is 3.0 both in the direction of MD and the direction of TD. The oriented film is made into the oriented monolayer film easy to split by being sent to the heat treat furnace based on the Tenter method, and being heat-fixed at a temperature of 210°. Also, the laminate film easy to split to prescribed by this experimental example is obtained as follows. The laminated film easy to split prescribed by the present invention is obtained by using the oriented film (with the width of 15 micrometer) as a base film for the surface, and using L-LDPE film (the tradename: Unilax LS-7 22C, thickness 50 micrometers) as a sealant film, and dry-laminating them. The bag easy to split can be produced when the laminated film easy to split obtained in this way is processed by the bag-making machine. In the attached Table 2, the results of the measurement of a split strength and an impact strength of the oriented film easy to split obtained in the condition of this experimental example and the result of the evaluation of an ease to split and ease to cut straight are shown. Also, a result of the evaluation of an ease to split and a straight line cut characteristic about the laminated film easy to split to prescribe by this experimental example is shown in Table 3. Also, the test of a strength against falling of the bag to evaluate the practicality of the laminate film easy to split is made.

### Experimental examples 2 - 18

The oriented film easy to split in accordance with these experimental examples is produced by mixing ratio of Ny6 and MXD6 in experimental example 1, the ethylene content of EVOH, the thickness ratio of the layers and the orientation ratio changed as is shown in Table 1. Incidentally, the production method is the same as in experimental example 1. In the table, the values of 1st and 3rd layer in the column of raw material composition, show weight ratio. The value of the 2nd layer indicates ethylene content (mol %). The ethylene-vinyl acetate copolymer saponification material made by Kuraray Co.Ltd.(the tradename: EVAL F,ethylene content 32% mol, EVAL L:29%mol, EVAL H:38% mol, EVAL E:43 mol%) is used as EVOH. The laminated film easy to split prescribed by these experimental examples is produced by using this oriented film easy to split (a 15-micrometer thickness) as a base film for the surface and using each film listed in Table 3 as sealant film and dry-laminating the both films. Incidentally, the sealant film which is used in the experimental examples 2 - 16 is L-LDPE film with a 50-micrometer thickness. The sealant film which is used by the experimental example 17 is EVA film with a 50-micrometer thickness. The sealant film which is used by the experimental example 18 is the film in which PE is laminated with the thickness of 20 micrometer against the L-LDPE film with a 60-micrometer thickness (but the oriented film easy to split is laminated on the PE side). The easy to split bag is manufactured by processing laminated film easy to split produced in this way by a bag-making machine. And, in Table 1, measurement and evaluation of various characteristics of an oriented film easy to split with the 3-layer structure which is obtained in the condition of experimental examples 2 - 18 are shown. Also, in Table 3, the evaluation result of ease to split and ease to cut straight of the laminated film easy to split in the experimental examples 2 - 18 and result of test of a strength against falling of the bag made of the laminated film easy to split are shown. When the gas barrier quality of the oriented film easy to split prescribed in the experimental example is measured, as for oxygen penetration degree (cc/m² 24Hr), in the experimental example 4, it is 0.79, in the experimental example 11, it is 0.48, in the experimental example 12, it is 0.31, and in the experimental example 13, it is 2.06. When the gas barrier quality of the laminated film easy to split is measured, the oxygen penetration degree (cc/m² 24Hr) is 0.79 in the experimental example 4, 0.48 in the experimental example 11, 0.31 in the experimental example 12, 2.06 in the experimental example 13, and 6.14 in the experimental example 14. The oxygen penetration testing machine made by Mocon Co.Ltd is used to measure a degree of oxygen penetration. Incidentally, the measurement condition is the temperature of 23°C and a relative humidity of 0%.

### Control examples 1 - 14

Each oriented film manufactured in these control examples is manufactured by a manufacturing process as in experimental exampe 1 except that mixing ratio of Ny6 and MXD6, ethylene content of EVOH, the thickness ratio of the layers and the orientation ratio in the above-mentioned experimental example 1 are changed as are shown in Table 4. The ethylene-vinyl acetate copolymer saponification material made by Kuraray Co.Ltd. (the tradename: EVAL F, ethylene content 32% mol, EVAL H: 38 mol%). The laminated films of these control examples are produced by using an oriented film (with a width of 15 micrometer) as a base material film for the surface, and laminating sealant film with each film in Table 6 by the dry-laminating method. Incidentally, the sealant film which is used in these control examples is L-LDPE film with 50-micrometer thickness. The laminated film obtained in this way is made into a bag by being processed by a bag-making machine. In Tables 4 and 5, the measurement of various features and evaluation results of oriented film obtained in the condition of the control examples 1 - 14 are indicated. Also, in Table 6, the evaluation result of ease to split and ease to cut straight of the laminated film in the control examples 1 - 14 are indicated. Moreover, the result of the test of strength against falling is also indicated. When the gas barrier quality of the film is measured, oxygen penetration degree (cc/m² 24Hr) is 1.56 in the control example 1, 0.30 in the control example 7, and 61.0 in the control example 8. When the gas barrier quality of the laminate film is measured, the oxygen penetration degree (cc/m² 24Hr) is 0.30 in the experimental example 1, 61.0 in the experimental example 2, 2.06 in the experiment example 13, and 6.14 in the experimental example 14.

### Consideration of the experimental examples 1 - 18 and the control examples 1 - 14.

The oriented film easy to split which is obtained in the condition of the experimental examples 1 - 18 has the 1st layer containing nylon 6(Ny6) and polymeta-xylylene adipamide (MXD6) at the weight ratio of 40-85:60-15 and the 2nd layer comprising the ethylene-vinyl acetate copolymer saponification one (EVOH). Incidentally, the thickness ratio of the 1st layer and the 2nd layer is 2:1-1:2 and the orientation ratio of the film during the biaxial orientation is 2.8 and over both in MD and TD directions. From Tables 1 and 2, it is judged that the oriented films easy to split obtained in these ways have excellent ease to split with split strength of 89 N/cm and under and their ease to cut straight is good or very good. Also, the impact strength of them indicates a high value of 50,000 N.cm/cm and over. Also, it is considered that the laminated film easy to split obtained from Table 3 in the condition of experimental examples 1 - 18 has excellent ease to split and good or very good ease to cut straight. Because in the falling test of the bag made of the laminated film easy to split in each embodiment, no or almost no bag is torn, it is considered it has sufficient practical strength. On the other hand, the following fact is obtained from Tables 4 and 5: the oriented film which is obtained in control examples 1 - 4 meets the condition intended by the present invention but because it has no first layer containing Ny6 and MXD6 concerning the present invention, even if the impact strength is enough, the split strength is big and the ease to split and the ease to cut straight are inferior. Though the oriented film which is obtained in control examples 5 and 6, has a layer containing Ny6 and MXD6, the ingredient ratio is not in the range intended by the present invention, wherein the split strength is big and the ease to cut straight is inferior. Incidentally, as is shown in the control example 6, when the ingredient ratio of MXD6 is too large, the impact strength is inferior, too. The oriented film which is obtained in the condition of the control example 7 - 9 is a simple substance film. In other words, because it is not made of the combination of the 1st layer and the 2nd layer, any one of split strength, the ease to cut straight, and the impact strength is inferior. Though the oriented film which is obtained in the condition of the control example 10 - 12 has the 1st layer and the 2nd layer, because the orientation ratio doesn't reach the range intended by the present invention, any one of split strength, ease to cut straight, and the impact strength is inferior. Though the oriented film which is obtained in control examples 10 - 12 has the 1st layer and the 2nd layer, because the thickness ratio of each layer is out of the range intended by the present invention, any one of split strength, ease to cut straight, and the impact strength is inferior. Also, following fact are considered from Table 6: As for the laminated film which is obtained in control examples 1 - 4, no bag is torn in the falling test and the practical strength is sufficient, but ease to split and ease to cut straight are inferior. As for the laminated film which is obtained in control examples 5 and 6, ease to split and ease to cut straight are inferior. Also, as for the control example 6, considerable bags are torn in the falling test. As for each laminated film which is obtained in control examples 7 - 9, at least one of ease to split, ease to cut straight and the strength against falling is inferior. As for the laminated film which is obtained in control examples 10 - 12, at least two of ease to split, ease to cut straight, and strength against falling are inferior. As for the laminated film which is obtained in control examples 13 and 14, at least one of the ease to split, ease to cut straight and the strength against falling is inferior.

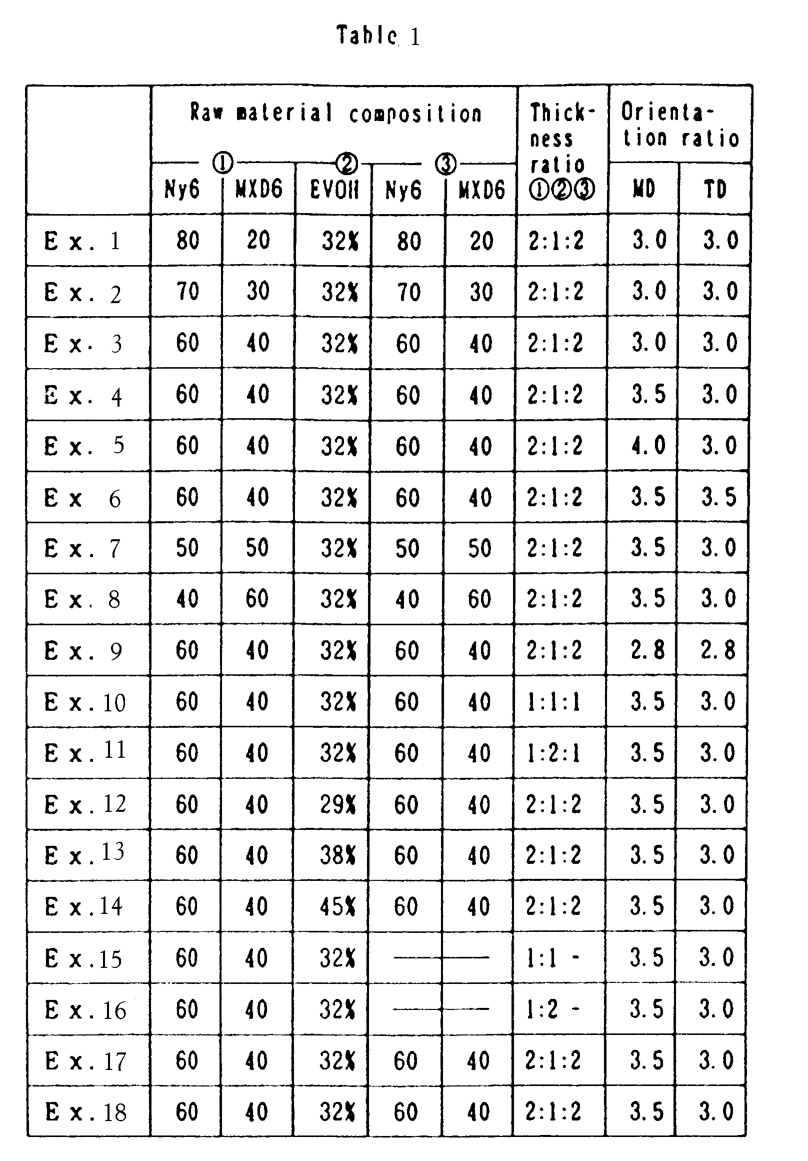

**TABLE 2**

| | Split strength (N/cm) | | Ease to split | Ease to cut straight | Impact strength (N.cm/cm) | Total evaluation |
|---|---|---|---|---|---|---|
| | MD | TD | | | | |
| Ex. 1 | 70 | 70 | ○ | ○ | 80000 ○ | ○ |
| Ex. 2 | 65 | 65 | ○ | ○ | 70000 ○ | ○ |
| Ex. 3 | 60 | 60 | ○ | Ⓞ | 60000 ○ | Ⓞ |
| Ex. 4 | 68 | 68 | ○ | Ⓞ | 70000 ○ | Ⓞ |
| Ex. 5 | 65 | 65 | ○ | Ⓞ | 75000 ○ | Ⓞ |
| Ex. 6 | 65 | 65 | ○ | Ⓞ | 75000 ○ | Ⓞ |
| Ex. 7 | 70 | 70 | ○ | Ⓞ | 65000 ○ | Ⓞ |
| Ex. 8 | 70 | 70 | ○ | Ⓞ | 60000 ○ | Ⓞ |
| Ex. 9 | 88 | 88 | Δ | ○ | 55000 ○ | ○ |
| Ex. 10 | 80 | 80 | Δ | ○ | 55000 ○ | ○ |
| Ex. 11 | 87 | 89 | Δ | ○ | 50000 ○ | ○ |
| Ex. 12 | 70 | 70 | ○ | ○ | 65000 ○ | Ⓞ |
| Ex. 13 | 65 | 65 | ○ | ○ | 75000 ○ | Ⓞ |
| Ex. 14 | 65 | 65 | ○ | ○ | 80000 ○ | Ⓞ |
| Ex. 15 | 80 | 80 | Δ | ○ | 55000 ○ | ○ |
| Ex. 16 | 85 | 86 | Δ | ○ | 50000 ○ | ○ |
| Ex. 17 | 68 | 68 | ○ | Ⓞ | 70000 ○ | Ⓞ |
| Ex. 18 | 68 | 68 | ○ | Ⓞ | 70000 ○ | Ⓞ |

**TABLE 3**

| | Sealant film, thickness (µm) | Ease to split | Ease to cut straight | Strength against falling | Total evaluation |
|---|---|---|---|---|---|
| Ex. 1 | L LDPE 50 | ○ | ○ | ○ | ○ |
| Ex. 2 | L LDPE 50 | ○ | ○ | ○ | ○ |
| Ex. 3 | L LDPE 50 | ○ | Ⓞ | ○ | Ⓞ |
| Ex. 4 | L LDPE 50 | ○ | Ⓞ | ○ | Ⓞ |
| Ex. 5 | L LDPE 50 | ○ | Ⓞ | ○ | Ⓞ |
| Ex. 6 | L LDPE 50 | ○ | Ⓞ | ○ | Ⓞ |
| Ex. 7 | L LDPE 50 | ○ | Ⓞ | ○ | Ⓞ |
| Ex. 8 | L LDPE 50 | ○ | Ⓞ | ○ | Ⓞ |
| Ex. 9 | L LDPE 50 | Δ | ○ | ○ | ○ |
| Ex. 10 | L LDPE 50 | Δ | ○ | ○ | ○ |
| Ex. 11 | L LDPE 50 | Δ | ○ | ○ | ○ |
| Ex. 12 | L LDPE 50 | ○ | ○ | ○ | Ⓞ |
| Ex. 13 | L LDPE 50 | ○ | ○ | ○ | Ⓞ |
| Ex. 14 | L LDPE 50 | ○ | ○ | ○ | Ⓞ |
| Ex. 15 | L LDPE 50 | Δ | ○ | ○ | ○ |
| Ex. 16 | L LDPE 50 | Δ | ○ | ○ | ○ |
| Ex. 17 | EVA. 50 | ○ | Ⓞ | ○ | Ⓞ |
| Ex. 18 | PE. 20/L LDPE 60 | ○ | Ⓞ | ○ | Ⓞ |

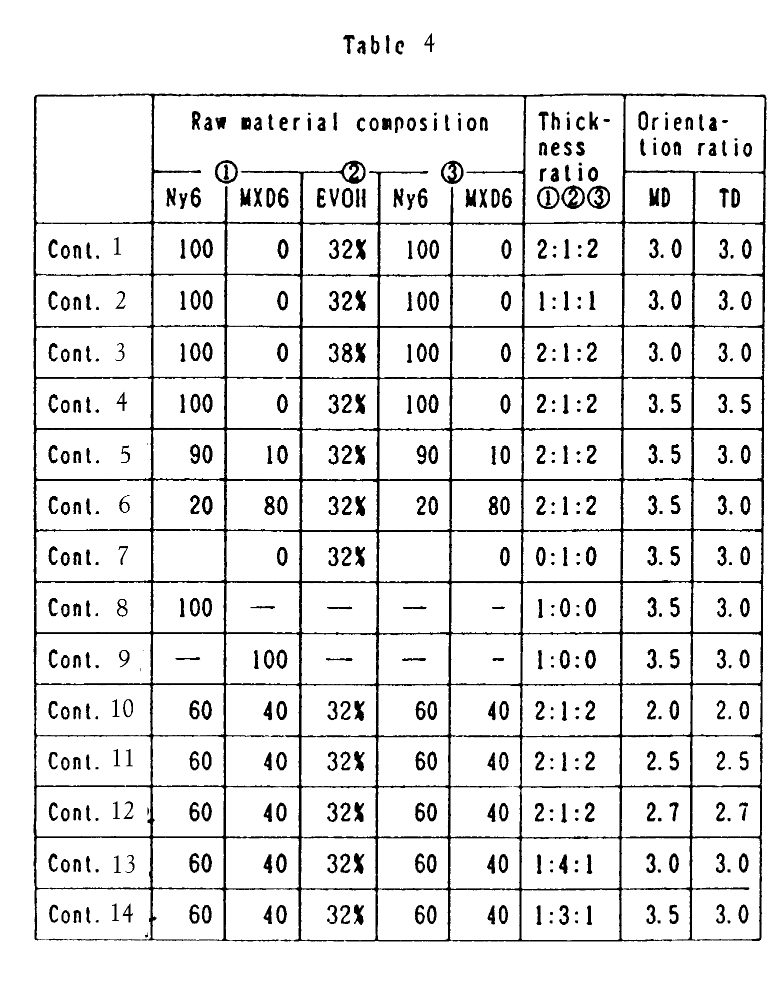

**TABLE 5**

| | Split strength (N/cm) | | Ease to split | Ease to cut straight | Impact strength (N.cm/cm) | Total evaluation |
|---|---|---|---|---|---|---|
| | MD | TD | | | | |
| Cont. 1 | 250 | 260 | × | × | 75000 ○ | × |
| Cont. 2 | 350 | 370 | × | × | 60000 ○ | × |
| Cont. 3 | 220 | 200 | × | × | 78000 ○ | × |
| Cont. 4 | 180 | 180 | × | × | 83000 ○ | × |
| Cont. 5 | 150 | 150 | × | × | 70000 ○ | × |
| Cont. 6 | 150 | 150 | × | × | 35000 × | × |
| Cont. 7 | 110 | 110 | Δ | × | 60000 ○ | × |
| Cont. 8 | 85 | 87 | Δ | × | 80000 ○ | × |
| Cont. 9 | 65 | 65 | ○ | ○ | 30000 × | × |
| Cont. 10 | 150 | 150 | × | × | 40000 × | × |
| Cont. 11 | 120 | 120 | × | × | 45000 ○ | × |
| Cont. 12 | 90 | 90 | × | × | 50000 ○ | × |
| Cont. 13 | 180 | 180 | × | × | 45000 ○ | × |
| Cont. 14 | 110 | 120 | × | × | 50000 ○ | × |

**TABLE 6**

| | Sealant film, thickness (µm) | Ease to split | Ease to cut straight | Strength against falling | Total evaluation |
|---|---|---|---|---|---|
| Cont. 1 | L LDPE 50 | × | × | ○ | × |
| Cont. 2 | L LDPE 50 | × | × | ○ | × |
| Cont. 3 | L LDPE 50 | × | × | ○ | × |
| Cont. 4 | L LDPE 50 | × | × | ○ | × |
| Cont. 5 | L LDPE 50 | × | × | ○ | × |
| Cont. 6 | L LDPE 50 | × | × | × | × |
| Cont. 7 | L LDPE 50 | Δ | × | ○ | × |
| Cont. 8 | L LDPE 50 | Δ | × | ○ | × |
| Cont. 9 | L LDPE 50 | ○ | ○ | × | × |
| Cont. 10 | L LDPE 50 | × | × | × | × |
| Cont. 11 | L LDPE 50 | × | × | × | × |
| Cont. 12 | L LDPE 50 | Δ | × | ○ | × |
| Cont. 13 | L LDPE 50 | × | × | × | × |
| Cont. 14 | L LDPE 50 | × | × | ○ | × |

## Claims

1. A biaxially oriented film easy to split comprising a blend of nylon (Ny6) and poly meta-xylylene adipamide (MXD6), the weight ratio of said Ny6 and said MXD6 being 40-85:60-15, and the orientation ratios being at least 2.8 in both the MD and TD directions; characterised in that an ethylene-acetic acid vinyl copolymer saponification material (EVOH) is laminated as a second layer to the said Ny6 - MXD6 first layer, the thickness ratio between said first layer and said second layer being 2:1 - 1:2.

2. A film according to claim 1, in which the first and second layers are laminated together with other films.

## Patentansprüche

1. Eine biaxial orientierte, leicht trennbare Folie, enthaltend ein Gemisch aus Nylon (Ny6) und Polymetaxylylen-Adipamid (MXD6), wobei das Gewichtsverhältnis Ny6 zu MXD6 40-85:60-15 beträgt und die Ausrichtungsverhältnisse mindesten 2,8 sowohl in den MD- als auch in den TD-Richtungen ist; dadurch gekennzeichnet, daß ein Ethylen-Essigsäure-Vinylcopolymer-Verseifungsmaterial (EVOH) als zweite Schicht auf die erste Schicht aus Ny6-MXD6 auflaminiert ist, wobei das Dickenverhältnis zwischen der ersten Schicht und der zweiten Schicht 2:1 - 1:2 beträgt.

2. Eine Folie gemäß Anspruch 1, in dem die erste Schicht und die zweite Schicht mit weiteren Folien zusammenlaminiert sind.

## Revendications

1. Film orienté biaxialement, facile à fendre, comprenant un mélange de nylon (Ny6) et de polymétaxylylène-adipamide (MXD6), le rapport pondéral dudit Ny6 audit MXD6 étant de 40-85:60-15, et les rapports d'orientation étant d'au moins 2,8 à la fois dans les deux directions MD et TD; caractérisé en ce qu'une matière de saponification, du copolymère éthylène/acide acétique vinyle (EVOH), est stratifiée en tant que deuxième couche sur ladite première couche Ny6-MXD6, le rapport d'épaisseur entre ladite première couche et ladite deuxième couche étant de 2:1 à 1:2.

2. Film selon la revendication 1, dans lequel les première et deuxième couches sont stratifiées avec d'autres films.
